# EUROPÄISCHE PATENTSCHRIFT

(11) **EP 0 618 282 B1**
(45) Veröffentlichungstag und Bekanntmachung des Hinweises auf die Patenterteilung: **23.09.1998**
(21) Anmeldenummer: 94100272.7
(22) Anmeldetag: 11.01.1994
(51) Int. Cl.: C10J 3/84, C10K 1/04

(54) **Verfahren zur Kühlung von durch Vergasung gewonnenem Rohgas**
Process for cooling raw gas obtained by gasification
Procédé pour refroidir du gaz brut obtenu par gazéification

(30) Priorität: 31.03.1993 DE 4310447
(43) Veröffentlichungstag der Anmeldung: 05.10.1994
(73) Patentinhaber: Krupp Koppers GmbH, 45143 Essen (DE)
(72) Erfinder: Dziobek, Frank, D-45470 Mülheim/Ruhr (DE); Kowoll, Johannes, Dr., D-44799 Bochum (DE)
(74) Vertreter: Honke, Manfred, Dr.-Ing.

(56) Entgegenhaltungen:
- EP-A- 0 347 986
- EP-A- 0 349 090
- DE-A- 2 226 867
- DE-A- 2 710 154
- DE-A- 3 941 591
- US-A- 4 279 622
- US-A- 5 011 507

## Beschreibung

Die Erfindung betrifft ein Verfahren zur Kühlung von Rohgas aus einem mit feinkörnigen bis staubförmigen Brennstoffen betriebenen Vergasungsreaktor.

Bei der Kühlung von Rohgasen, die durch Vergasung von Kohle oder anderen festen Brennstoffen bis Temperaturen oberhalb des Schlackeschmelzpunktes des eingesetzten Brennstoffes gewonnen werden, besteht das Problem, daß zusammen mit dem erzeugten Rohgas Verunreinigungen aus dem Vergasungsreaktor ausgetragen werden, die bei der nachfolgenden Abkühlung des Rohgases erstarren und insbesondere im dem Vergasungsreaktor nachgeschalteten Abhitzekesselsystem und den Gasbehandlungseinrichtungen zu unerwünschten Ablagerungen führen können. Bei diesen Verunreinigungen handelt es sich in erster Linie um schmelzflüssige bzw. sinterfähige Schlackepartikel sowie um kondensierbare Dämpfe.

Um diesen Nachteil zu vermeiden, ist deshalb in der DE-PS 24 29 993 bereits vorgeschlagen worden, dem aus dem Vergasungsreaktor austretenden heißen Gas kaltes Produktgas als sogenanntes Quenchgas zuzusetzen, das nach Passieren des Abhitzekesselsystems über eine Leitung zurückgeführt und in den heißen Gasstrom zwischen dem Austritt aus dem Vergasungsreaktor und dem Eintritt in das Abhitzekesselsystem eingeblasen wird. Über die Art der Rückführung des kalten Quenchgases werden hierbei jedoch keine näheren Angaben gemacht.

Aus EP-A-0 349 090 ist ein Verfahren zur Kühlung von Rohgas bekannt, bei dem ein Teilstrom des erzeugten, gekühlten und entstaubten Gases zurückgeführt wird und zum Kühlen des Rohgases als Quenchgas eingesetzt wird. Die Temperatur des zurückgeführten Gases liegt zwischen 140°C und 540°C, vorzugsweise 315°C. Dieses bekannte Verfahren ist aufwendig und in energetischer Hinsicht nicht befriedigend.

Aus DE-A-3 941 591 ist fernerhin ein Verfahren zur Abkühlung von Kohlenmonoxid reichem heißen Synthesegas bekannt. Bei diesem bekannten Verfahren wird das aus einem Vergasungsreaktor austretende heiße Gas ohne vorherige Kühlung einer Venturidüse zugeführt und in der Venturidüse mit einem Quenchgasstrom in Form von abgekühltem Synthesegas vermischt und gekühlt. Die Venturidüse erfüllt hier die Funktion eines Mischaggregates. Bei dieser Verfahrensführung muß die treibende Kraft für die Gasansaugung durch einen entsprechend hohen Druck im Vergasungsreaktor aufgebracht werden. Bei heißerer oder kälterer Prozeßführung im Vergasungsreaktor ist es bei diesem Verfahren nicht möglich, schnell und angemessen zu reagieren und den Quenchgasmengenstrom entsprechend anzupassen. Insoweit zeichnet sich dieses bekannte Verfahren insbesondere in regelungstechnischer Hinsicht durch beachtliche Nachteile aus.

Aus der US-PS 3 963 457 ist ferner ein Verfahren der vorstehend beschriebenen Art bekannt, bei dem ein Teilstrom des kalten, gereinigten Gases hinter dem zweiten Gaswascher abgezogen und mittels eines Kompressors zum Austritt des Vergasungsreaktors zurückgeführt und dort dem Rohgasstrom vor dem Eintritt in das Abhitzekesselsystem zugesetzt wird.

In der Praxis hat sich jedoch gezeigt, daß mit der vorstehend beschriebenen Arbeitsweise, bei der zur Absenkung der Rohgastemperatur hinter dem Vergasungsreaktor verhältnismäßig große Volumenströme kalten Quenchgases zurückgeführt werden müssen, gegenüber einer Arbeitsweise ohne Rückführung von Quenchgas Wirkungsgradeinbußen in Kauf genommen werden müssen. Die auftretenden Wirkungsgradverluste sind dabei bedingt durch die Abkühlung des Gases in den Gaswaschern, die Abhitzenutzung in Niedertemperatursystemen sowie die Verdichterarbeit bei der Rückführung des Quenchgasstromes.

Die Arbeitsweise ohne Verwendung von Quenchgas ist jedoch ebenfalls nicht unproblematisch, da der Strahlungsteil des Abhitzekesselsystems in diesem Falle besonders verschmutzungsgefährdet ist. Da die unter den gegebenen Betriebsbedingungen zum Einsatz gelangenden Strahlungskessel außerdem sehr teuer sind, erfordert die Arbeitsweise ohne Quenchgas einen erheblichen appartiven Aufwand. Wenn bei der Abkühlung des Gases das gewünschte Temperaturniveau erreicht werden soll. Man ist deshalb schon aus wirtschaftlichen Gründen bestrebt, auf die Zugabe von Quenchgas nicht ganz zu verzichten.

Theoretische Überlegungen haben jetzt zu dem Ergebnis geführt, daß die beim Arbeiten mit kaltem Quenchgas auftretenden Wirkungsgradverluste weitgehend vermieden werden können, wenn stattdessen mit heißem Quenchgas gearbeitet wird und gleichzeitig das Problem der Wiederverdichtung des zurückgeführten heißen Quenchgases in energetisch und konstruktiv befriedigender Weise gelöst werden kann. Der Erfindung liegt deshalb die Aufgabe zugrunde, hierfür eine möglichst einfache und kostengünstige Lösung zu finden.

Diese Aufgabe wird gelöst durch ein Verfahren der eingangs genannten Art, wobei das mit einer Temperatur oberhalb des Schlackeschmelzpunktes aus dem Vergasungsreaktor abgezogene Rohgas in einer Abhitzekesselanordnung mit einem Strahlungskühler und einem nachgeschalteten Konvektionskühler gekühlt wird, das gekühlte Gas in einer nachgeschalteten Gasreinigung entstaubt wird, aus dem Konvektionskühler ein Teilstrom vor der Entstaubung mit einer Temperatur zwischen 200°C und 800°C abgezogen und mittels eines mit Treibgas beaufschlagten Injektors als Quenchgas in eine Quenchzone der Abhitzekesselanordnung zurückgeführt wird und ein Teilstrom des hinter der Gasreinigung abgezogenen Produktgases mittels eines Kompressors verdichtet und als Treibgas verwendet wird.

Diese Aufgabe wird fernerhin gelöst durch ein Verfahren der eingangs genannten Art, wobei das mit einer Temperatur oberhalb des Schlackeschmelzpunktes aus dem Vergasungsreaktor abgezogene Rohgas in einer Abhitzekesselanordnung mit einem Strahlungskühler und einem nachgeschalteten Konvektionskühler gekühlt wird, das gekühlte Gas in einer nachgeschalteten Gasreinigung entstaubt wird, aus dem Konvektionskühler ein Teilstrom vor der Entstaubung mit einer Temperatur zwischen 200°C und 800°C abgezogen und mittels eines mit Treibgas beaufschlagten Injektors als Quenchgas in eine Quenchzone der Abhitzekesselanordnung zurückgeführt wird und als Treibgas ein unter Druck stehendes Fremdgas, vorzugsweise Stickstoff, Wasserdampf oder Methan, verwendet wird.

Das heißt, beim erfindungsgemäßen Verfahren wird ein nicht entstaubtes und nur teilweise gekühltes Quenchgas mittels eines Injektors in eine Quenchzone zurückgeführt. Diese kann dabei im Bezug auf die Strömungsrichtung des Rohgases entweder vor oder hinter dem Strahlungsteil des Abhitzekesselsystems angeordnet sein. Gegebenenfalls kann die Quenchzone auch in den Strahlungsteil integriert sein. Die Quenchgasmenge wird hierbei so bemessen, daß durch die Mischung des Quenchgases mit dem heißen Rohgas die gewünschte mittlere Gastemperatur erreicht wird. Vorzugsweise wird das Quenchgas vor dem Strahlungskühler in die Abhitzekesselanordnung zurückgeführt und die Quenchgasmenge wird so bemessen, daß sich eine mittlere Gastemperatur von 900°C bis 1400°C als Mischungstemperatur einstellt. Es liegt auch im Rahmen der Erfindung, daß das Quenchgas hinter dem Strahlungskühler in die Abhitzekesselanordnung zurückgeführt wird und die Quenchgasmenge so bemessen wird, daß sich eine mittlere Gastemperatur von 700°C bis 1200°C als Mischungstemperatur einstellt.

Die Anwendung von Injektoren als Förderaggregat für die Rückführung des Quenchgases stellt dabei eine besonders optimale Lösung dar, weil es sich hierbei um äußerst betriebssichere und unempfindliche Ausrüstungen handelt, deren konstruktive Einfachheit kaum noch zu überbieten ist.

Der Einsatz von Injektoren lag in diesem Falle jedoch keineswegs nahe, da befürchtet werden mußte, daß bei der Förderung des staubhaltigen heißen Quenchgases ein erheblicher erosiver Verschleiß und/oder die Bildung von Ablagerungen in den Injektoren, insbesondere in deren engsten Querschnitten, auftritt. Erfindungsgemäß wird dies jedoch dadurch vermieden, daß die Injektoren mit einer verschleißfesten Auskleidung versehen werden und der Abzug des Quenchgases in einem Temperaturbereich ausgeführt wird, bei dem eine intensive Bildung von Ablagerungen nicht zu befürchten ist. Als besonders geeignet hat sich hierbei eine Auskleidung aus Schmelzbasalt oder Sintermetall erwiesen. Sollte trotzdem in gewissen Zeitabständen ein Austausch erforderlich sein, so haben Injektoren den Vorteil, daß sie relativ klein sind und deshalb sehr leicht ein- und ausgebaut werden können. Anstelle eines Injektors kann gegebenenfalls auch ein anderer Strahlapparat, wie z.B. ein Ringdiffusor oder ein Strahlventilator als Förderaggregat für das Quenchgas eingesetzt werden.

Ein weiteres positives Element der Erfindung ist in der Verwendung von nicht entstaubtem Gas als Quenchgas zu sehen, da dadurch auf eine Reinigung dieses Gasstromes in Trockenfiltern verzichtet werden kann. Es hat sich nämlich gezeigt, daß bei den relativ hohen Temperaturen, bei denen das Gas aus dem Konvektionsteil des Abhitzekesselsystems abgezogen wird, der Einsatz von Trockenfiltern zur Entstaubung des Gases zu Werkstoffproblemen und zu Verstopfungen führen kann und deshalb heute noch nicht großtechnischer Standard ist. Es kann daher festgestellt werden, daß unter den vorstehend aufgeführten Gesichtspunkten die erfindungsgemäße Lösung auch für den Fachmann keineswegs nahe lag.

Als Treibgas für die Injektoren wird vorzugsweise ein Teilstrom des entstaubten Produktgases verwendet. Dieser Teilstrom wird hinter dem Gaswascher oder dem Trockenfilter abgezogen und mittels eines Kompressors verdichtet. Anstelle von entstaubtem Produktgas kann aber auch ein anderes Gas, wie beispielsweise Stickstoff oder Wasserdampf, als Treibgas für die Injektoren verwendet werden. Dabei besteht die Möglichkeit, durch die Wahl des Treibgases die Gaszusammensetzung im Strahlungsteil des Abhitzekesselsystems zu verändern. Als Treibgas kann schließlich auch noch ein Gas eingesetzt werden, das mit dem heißen Rohgas bei Vermischung endotherm reagiert, wie z.B. Methan. Dadurch wird ein zusätzlicher Kühleffekt erreicht. Das Treibgas wird, sofern es nicht bereits unter einem ausreichenden Druck steht, in einem Kompressor so verdichtet, daß es im Bezug auf das zurückzuführende Quenchgas einen ausreichenden Überdruck aufweist. Durch Änderung des Treibgasdruckes kann die Menge des angesaugten Quenchgases in einem weiten Bereich variiert werden.

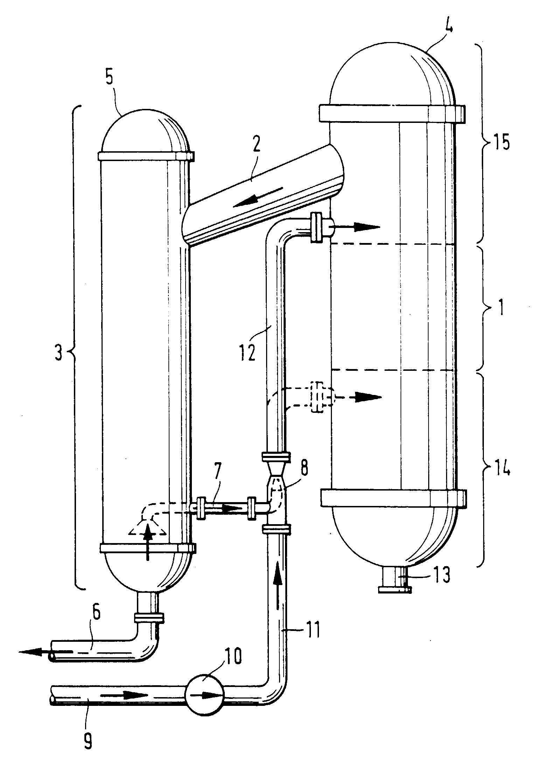

Die Abbildung zeigt als Ausführungsbeispiel in vereinfachter Darstellung eine Anlage zur Durchführung des erfindungsgemäßen Verfahrens und soll gleichzeitig zur Erläuterung eines Verfahrensbeispiels dienen. Das Abhitzekesselsystem des Vergasungsreaktors besteht dabei aus dem Strahlungsteil 1 mit einer darunter oder einer darüber angeordneten Quenchzone 14 bzw. 15 und dem Konvektionsteil 3, die durch die Leitung 2 miteinander verbunden sind. Sowohl der Strahlungs- als auch der Konvektionsteil sind in einem Druckbehälter 4 bzw. 5 untergebracht. Die Abbildung zeigt dabei nur eine der möglichen Ausführungsformen. Grundsätzlich können Strahlungs- und Konvektionsteil auch in ande rer Weise angeordnet werden, beispielsweise übereinander innerhalb eines gemeinsamen Druckbehälters. Der Vergasungsreaktor ist in der Abbildung nicht dargestellt. Er befindet sich entweder unmittelbar unter dem Druckbehälter 4 oder er kann auch gemeinsam mit dem Strahlungsteil 1 1 im Druckbehälter 4 angeordnet sein. Auf Einzelheiten des Vergasungsreaktors und des Abhitzekesselsystems braucht hier nicht eingegangen zu werden, da es sich hierbei um bekannte Konstruktionen handelt und dies nicht Gegenstand der Erfindung ist. Aus dem Vergasungsreaktor gelangt das erzeugte Rohgas über den Strahlungsteil 1 und die Leitung 2 in den Konvektionsteil 3. Aus dem Konvektionsteil 3 wird das gekühlte Gas über die Leitung 6 abgezogen und der weiteren, in der Abbildung nicht dargestellten Gasbehandlung und -reinigung zugeführt. Erfindungsgemäß ist an den Konvektionsteil 3 die Abzugsleitung 7 angeschlossen, durch die ein Teilstrom des nicht entstaubten Gases aus dem Konvektionsteil 3 in den Injektor 8 abgezogen wird. Die Abzugsleitung 7 ist dabei umso höher am Konvektionsteil 3 angeordnet, je höher die gewünschte Temperatur ist, mit der der als Quenchgas dienende Teilstrom des nicht entstaubten Gases aus dem Konvektionsteil 3 abgezogen werden soll. Das für den Betrieb des Injektors 8 erforderliche Treibgas gelangt über die Leitung 9 in den Kompressor 10. Wie bereits weiter oben erwähnt wurde, handelt es sich vorzugsweise um einen Teilstrom des entstaubten Produktgases, der aus der nicht dargestellten Gasreinigung entweder hinter dem Gaswascher oder hinter dem Trockenfilter abgezogen wurde. Im Kompressor 10 wird das Treibgas so verdichtet, daß es den erforderlichen Überdruck aufweist, um den über die Abzugsleitung 7 abgezogenen Gasteilstrom über die Leitung 12 als Quenchgas oder in die Quenchzone 14 oder 15 zurückzuführen. Der punktierte Pfeil in der Abbildung soll andeuten, daß das Quenchgas sowohl in eine vor als auch in eine hinter dem Strahlungsteil 1 liegende Quenchzone eingeleitet werden kann. Da das Rohgas aus dem Vergasungsreaktor im Strahlungsteil 1 eine Abkühlung erfährt, ist die Gastemperatur selbstverständlich in der darüber angeordneten Quenchzone 15 niedriger als in der darunter angeordneten Quenchzone 14. Es hängt dabei vom jeweiligen Verschmutzungsverhalten des Rohgases sowie den Bedingungen des Wärmeüberganges ab, bei welchem Temperaturniveau des Rohgases die Zumischung des Quenchgases erfolgen muß. Wenn das Rohgas schmelzflüssige Schlackepartikel enthält, die bereits bei einer verhältnismäßig hohen Temperatur erstarren, kann die Quenchgaseinleitung bereits vor dem Strahlungsteil 1 erfolgen, da in diesem Falle eine weniger starke Abkühlung erforderlich ist als im umgekehrten Falle, bei dem die Schlackepartikel erst bei verhältnismäßig niedrigen Temperaturen erstarren. Hierbei ist eine Quenchgaseinleitung hinter dem Strahlungsteil angebracht.

Gemäß einer in der Abbildung nicht dargestellten Ausführungsform ist es auch möglich, daß das aus dem Konvektionsteil 3 abgezogene Quenchgas vor der Wiedereinleitung in den Strahlungsteil 1 eine zusätzliche Abkühlung in einen Wärmetauscher erfährt. Diese Variante wird man vor allem dann einsetzen, wenn das aus dem Konvektionsteil 3 über die Leitung 7 abgezogene Gas eine Temperatur von > 400°C aufweist. Ferner ist eine Ausführungsform möglich, bei der im Druckbehälter 4 nur eine Quenchzone 14 angeordnet ist und auf eine Kühlung des Gases in einem Strahlungsteil 1 ganz verzichtet wird. Die Gaskühlung erfolgt in diesem Falle ausschließlich durch die Kombination von Gasquench und Konvektionskühlung.

Sofern der Vergasungsreaktor im Druckbehälter 4 angeordnet ist, dient der Stutzen 13 dem Schlackeabzug. Andernfalls stellt er die Verbindung zwischen dem Druckbehälter 4 und dem darunter liegenden Vergasungsreaktor dar.

Das Ausführungsbeispiel betrifft die Kühlung von 190.000 Nm³/h Rohgas, die durch Flugstromvergasung (Prenflo-Verfahren) von Kohlenstaub unter einem Druck von 27 bar gewonnen wurden. Das Rohgas gelangt dabei mit einer Temperatur von ca. 1500°C von unten in den Strahlungsteil 1. Zur Abkühlung des Rohgases werden 150.000 Nm³/h Quenchgas mit einer Temperatur von 250°C in die Quenchzone 14 eingeleitet. Das Rohgas erfährt dadurch eine Abkühlung bis auf eine Temperatur von 800°C, so daß die im Rohgas enthaltenen Verunreinigungen keine nennenswerte Sinterfähigkeit mehr aufweisen und aus dem Rohgas abgeschieden werden können sowie gleichzeitig im nachgeschalteten Konvektionsteil 3 keine thermischen Schäden auftreten. Als Quenchgas wird ein Teilstrom des gekühlten Gases verwendet, der über die Abzugsleitung 7 aus dem unteren Bereich des Konvektionsteiles in den Injektor 8 gelangt. Als Treibgas für den Injektor 8 werden 25.000 Nm³ entstaubtes Produktgas verwendet, das hinter dem in der Abbildung nicht dargestellten Trockenfilter über die Leitung 9 abgezogen und im Kompressor 10 bis auf einen Überdruck von 3 bar verdichtet wurde.

Die mit dem erfindungsgemäßen Verfahren erzielbaren Vorteile lassen sich wie folgt zusammenfassen:
- Äußerst niedrige Wärme- und Verdichtungsverluste, da nur ein geringer Teilstrom des entstaubten und gereinigten Produktgases wiederverdichtet werden muß,
- äußerst niedrige Investitionskosten durch den Einsatz von Injektoren als Förderaggregat bei gleichzeitiger Möglichkeit, den Strahlungsteil des Abhitzekesselsystems zu verkleinern oder ganz fortfallen zu lassen,
- hohe Betriebssicherheit des Verfahrens, da für die Förderung des Quenchgases keine Aggregate mit beweglichen Teilen verwendet werden,
- die Möglichkeit, als Treibgas für den Injektor Gase unterschiedlicher Zusammensetzung zu verwenden und damit die Gaszusammensetzung im Strahlungsteil zu verändern und
- problemlose und kostengünstige Reparatur- oder Austauschmöglichkeit beim Ausfall eines Injektors sowie einfacher Aufbau der Anlage.

## Patentansprüche

1. Verfahren zur Kühlung von Rohgas aus einem mit feinkörnigen bis staubförmigen Brennstoffen betriebenen Vergasungsreaktor, wobei
das mit einer Temperatur oberhalb des Schlackeschmelzpunktes aus dem Vergasungsreaktor abgezogene Rohgas in einer Abhitzekesselanordnung mit einem Strahlungskühler und einem nachgeschalteten Konvektionskühler gekühlt wird,
das gekühlte Gas in einer nachgeschalteten Gasreinigung entstaubt wird,
aus dem Konvektionskühler ein Teilstrom vor der Entstaubung mit einer Temperatur zwischen 200 und 800 °C abgezogen und mittels eines mit Treibgas beaufschlagten Injektors als Quenschgas in eine Quenschzone der Abhitzekesselanordnung zurückgeführt wird und
ein Teilstrom des hinter der Gasreinigung abgezogenen Produktgases mittels eines Kompressors verdichtet und als Treibgas verwendet wird.

2. Verfahren zur Kühlung von Rohgas aus einem mit feinkörnigen bis staubförmigen Brennstoffen betriebenen Vergasungsreaktor, wobei
das mit einer Temperatur oberhalb des Schlackeschmelzpunktes aus dem Vergasungsreaktor abgezogene Rohgas in einer Abhitzekesselanordnung mit einem Strahlungskühler und einem nachgeschalteten Konvektionskühler gekühlt wird,
das gekühlte Gas in einer nachgeschalteten Gasreinigung entstaubt wird,
aus dem Konvektionskühler ein Teilstrom vor der Entstaubung mit einer Temperatur zwischen 200 und 800 °C abgezogen und mittels eines mit Treibgas beaufschlagten Injektors als Quenschgas in eine Quenschzone der Abhitzekesselanordnung zurückgeführt wird und
als Treibgas ein unter Druck stehendes Fremdgas, vorzugsweise Stickstoff, Wasserdampf oder Methan, verwendet wird.

3. Verfahren nach Anspruch 1 oder 2, wobei das Quenschgas vor dem Strahlungskühler in die Abhitzekesselanordnung zurückgeführt wird und die Quenschgasmenge so bemessen wird, daß sich eine mittlere Gastemperatur von 900 bis 1400 °C als Mischungstemperatur einstellt.

4. Verfahren nach Anspruch 1 oder 2, wobei das Quenschgas hinter dem Strahlungskühler in Abhitzekesselanordnung zurückgeführt wird und die Quenschgasmenge so bemessen wird, daß sich eine mittlere Gastemperatur von 700 bis 1200 °C als Mischungstemperatur einstellt.

5. Verfahren nach einem der Ansprüche 1 bis 4, wobei ein Injektor mit einer verschleißfesten Auskleidung, wie beispielsweise Schmelzbasalt oder Sintermetall, verwendet wird.

## Claims

1. A process for cooling crude gas from gasification reactor operated with fine particulate to dust-like fuels, wherein the crude gas, which is taken off from the gasification reactor at a temperature above the slag melting point, is cooled in a waste heat boiler arrangement comprising a radiation cooling device and a downstream convection cooling device, the cooled gas is dedusted in a downstream gas cleaning stage, a partial stream is taken off from the convection cooling device, at a temperature between 200 and 800°C and upstream of the de-dusting stage, and is recycled as a quench gas, by means of an injector which is acted upon by propellant gas, to a quenching zone of the waste heat boiler arrangement, and a partial stream of the product gas which is taken offdownstream ofthe gas cleaning stage is compressed by means of a compressor and is used as the propellant gas.

2. A process for cooling crude gas from a gasification reactor operated with fine particulate to dust-like fuels, wherein the crude gas, which is taken off from the gasification reactor at a temperature above the slag melting point, is cooled in a waste heat boiler arrangement comprising a radiation cooling device and a downstream convection cooling device, the cooled gas is dedusted in a downstream gas cleaning stage, a partial stream is taken off from the convection cooling device, at a temperature between 200 and 800°C and upstream of the de-dusting stage, and is recycled as a quench gas, by means of an injector which is acted upon by propellant gas, to a quenching zone of the waste heat boiler arrangement, and an external gas which is under pressure, preferably nitrogen, steam or methane, is used the propellant gas.

3. A process according to any one of claims 1 or 2, wherein the quench gas is recycled to the waste heat boiler arrangement upstream of the radiation cooling device, and the amount of quench gas is designed so that an average gas temperature of 900 to 1400°C is obtained as the mixture temperature.

4. A process according to claims 1 or 2, wherein the quench gas is recycled to the waste heat boiler arrangement downstream of the radiation cooling device, and the amount of quench gas is designed so that an average gas temperature of 700 to 1200°C is obtained as the mixture temperature.

5. A process according to any one of claims 1 to 4, wherein an injector is used which comprises an abrasion-resistant lining, such as fused basalt or sintered metal for example.

## Revendications

1. Procédé de refroidissement d'un gaz brut provenant d'un réacteur de gazéification, fonctionnant avec des combustibles à grains fins à pulvérulents, dans lequel
le gaz brut extrait du réacteur de gazéification, à une température supérieure au point de fusion des scories, est refroidi dans un dispositif à chaudière de récupération comportant un refroidisseur à rayonnement et un refroidisseur à convexion monté en aval,
le gaz refroidi est dépoussiéré dans un dispositif d'épuration de gaz monté en aval,
un courant partiel est extrait du refroidisseur à convexion, avant le dépoussiérage à une température comprise entre 200 et 800 °C et est recyclé, au moyen d'un injecteur alimenté en gaz de propulsion, sous forme d'un gaz d'injection dans une zone d'injection du dispositif à chaudière de récupération et
un courant partiel du gaz de produits, extrait derrière le dispositif d'épuration de gaz, est compressé au moyen d'un compresseur et utilisé en tant que gaz de propulsion.

2. Procédé de refroidissement d'un gaz brut provenant d'un réacteur de gazéification, fonctionnant avec des combustibles à grains fins à pulvérulents, dans lequel
le gaz brut extrait du réacteur de gazéification, à une température supérieure au point de fusion des scories, est refroidi dans un dispositif à chaudière de récupération comportant un refroidisseur à rayonnement et un refroidisseur à convexion monté en aval,
le gaz refroidi est dépoussiéré dans un dispositif d'épuration de gaz monté en aval,
un courant partiel est extrait du refroidisseur à convexion, avant le dépoussiérage à une température comprise entre 200 et 800 °C et est recyclé, au moyen d'un injecteur alimenté en gaz de propulsion, sous forme d'un gaz d'injection dans une zone d'injection du dispositif à chaudière de récupération et
un gaz étranger sous pression, de préférence de l'azote, de la vapeur d'eau ou du méthane, est utilisé comme gaz de propulsion.

3. Procédé selon la revendication 1 ou 2, dans lequel le gaz d'injection est recyclé avant le refroidisseur à rayonnement, dans le dispositif à chaudière de récupération, et la quantité de gaz d'injection est telle qu'il s'établit une température de gaz moyenne comprise entre 900 et 1 400 °C, en tant que température de mélange.

4. Procédé selon la revendication 1 ou 2, dans lequel le gaz d'injection est recyclé derrière le refroidisseur à rayonnement, dans le dispositif à chaudière de récupération, et la quantité de gaz d'injection est telle qu'il s'établit une température de gaz moyenne comprise entre 700 et 1 200 °C, en tant que température de mélange.

5. Procédé selon l'une des revendications 1 à 4, dans lequel un injecteur est utilisé avec un revêtement résistant à l'usure, tel que par exemple du basalte fondu ou un métal fritté.
